# EUROPEAN PATENT APPLICATION

(11) **EP 1 610 199 A1**
(43) Date of publication of application: **28.12.2005**
(21) Application number: 04291407.7
(22) Date of filing: 04.06.2004
(51) Int. Cl.: G06F 1/00

(54) **Controlling access to a secure service by means of a removable security device**

(71) Applicant: Axalto SA, 92120 Montrouge (FR)
(72) Inventor: Wlodarczyk, Lukasz, c/o Axalto SA, 92120 Montrouge (FR)

(57) **Abstract**

A method of controlling access to a secure service by means of a removable security device comprises the steps of connecting said removable security device with a system capable of performing a secure service; detecting that a connection between said removable security device and said device capable of performing a secure service has been established; disconnecting said removable security device from said system capable of performing a secure service; re- connecting said removable security device with said system capable of performing a secure service; detecting that a re-connection between said removable security device and said system capable of performing a secure service has been established; and granting a requested secure service if the establishment of a re-connection between said removable security device and said system capable of performing a secure service has been detected.

## Description

### BACKGROUND OF THE INVENTION

### Field of the invention

The present invention generally relates removable security devices, and particularly to controlling access to a secure service by means of a removable security device.

### Background Art

In recent years, use of smart cards has become widely spread for purposes of authentication to a computer or terminal, in credit cards, loyalty program cards, etc. The use of smart cards is also discussed in several countries for health insurance members.

One of the principal features of smart card technology is the ability to act as a secure repository for various sensitive credentials, such as digital private keys for use in Public Key Infrastructures (PKI). Some smart cards are not only able to safely store, guard and allow access to such credentials, but are also able to perform more complicated secure operations, such as encryption or decryption of data, generating keys or calculating hash values, themselves.

When such a sensitive operation on a smart card is invoked by a user from a computer (Personal Computer), smart cards activate mechanisms that attempt to guarantee that the smart card holder is physically present and that he is the one requesting the service that is about to be delivered.

For example, before a secure operation, such as a digital signature is computed on the computer, which requires access to a key stored inside the smart card, the user is requested to enter his Personal Identification Number (PIN), a secret code assigned to the card holder that lets him access his card, and with that allows to access the private key assigned to him for use in the digital signature process.

Ensuring the presence and consent of the user to perform a sensitive operation is also of substantial importance for compliance with the Directive 1999/93/EC of the European Parliament and the Council of 13 December 1999 on a Community framework for electronic signatures.

However, computers are unfortunately not sufficiently trustworthy. For example, some versions of the so-called SoBig virus, a virus that spread on million computers in August 2003, downloaded some malicious code to the computer infected, called a trojan. This trojan installs a key logger, to spy all keystrokes the user makes, and sends results back to the attacker, including everything the user types on his keyboard, and in particular the login/password pairs and PIN codes.

In similar fashion, with a malicious program running on the computer, it is also possible to spy out the communications with a smart card connected to the computer. This can be done for example by using serial port sniffers or the like, or by maliciously altering the operating system, the middleware and/or the application software to access the data or in order to decrypt communications in case they are encrypted.

In other words, some malicious code can intercept and thus learn the PIN code. At a later time, the malicious code could then send the PIN code obtained in this fashion to the card in order to perform a sensitive operation without the consent of the user. In this way, it would be possible for the malicious code to decrypt encrypted files, sign documents, for example a contract, authenticate to sensitive servers or destroy valuable information.

Especially in the case of smart cards that are plugged in the computer for a long time, this poses a serious threat, as a possible attacker would find a long time window for accessing the smart card. However, the most classical use for smart cards in information technology is and has been computer access protection, the argument being that as soon as the card is removed, the computer is locked. This, however, requires that the card is present as long as the computer is in use.

This means that as soon as the user is logged on his computer, an attacker using malicious code, e.g. a virus, potentially has access to the card for a considerably long period of time, typically several hours per day for an office worker.

Thus, using smart cards, it cannot be guaranteed the physical presence of the user and his consent to perform a secure operation.

To protect from this risk, often a trusted terminal, comprising safe logic of its own, is put between the card and the computer, for example pinpad readers. In pinpad reader solutions, the PIN is typed on the pinpad and not on the computer, and from the pinpad reader the PIN is directly transferred to the smart card, therefore the PIN cannot be intercepted in the computer by some malicious code. Also, because the user is required to type the PIN on the pinpad, there is no way for an attacker, even if he would have been able to get hold of the PIN code via other means, e.g., social engineering, to use malicious code on the computer to remotely supply the PIN to the smart card.

In other words, a pinpad reader guarantees that the user is physically present and willing to perform a sensitive operation on the card at the time it is performed.

However, solutions involving pinpad readers have disadvantages from an economical and business point of view. As pinpad readers are secure terminals requiring own intelligence, they are considerably expensive. In particular, when used in conjunction with high-end smart cards such as those compliant with European digital signature constraints, these pinpad readers need to implement a secure channel, due to the European directive requiring all commands sent to the card being encrypted, including the PIN. As a consequence, some dedicated software must be implemented within the pinpad reader and some key protection mechanisms must be put in place.

Pinpad readers are not only more expensive than basic transparent readers used for smart cards, but also imply a new business process, thus again increasing costs. Pinpad readers need to be personalized secure channel keys of the customer's smart cards, alternatively a dedicated Secure Authentication Module SAM has to be personalized accordingly.

### SUMMARY OF THE INVENTION

It is therefore an object of the invention to provide a solution to the above mentioned disadvantages and problems, and to improve security for using removable security devices providing a secure service, such as smart cards, by ensuring the physical presence and consent of a user for gaining access to a secure service provided by the removable security device, without requiring costly additional hardware, such as trusted terminals.

This object is achieved according to the present invention by a method of controlling access to a secure service by means of a removable security as defined in claim 1, a removable security device as defined in claim 7, and a system for performing secure operations, as defined in claim 13. Advantageous embodiments are claimed in dependent claims 2 to 6, 8 to 12 and 14.

According to a first preferred embodiment of the invention, a method of controlling access to a secure service by means of a removable security device, comprises the steps of connecting said removable security device with a system capable of performing a secure service; detecting that a connection between said removable security device and said device capable of performing a secure service has been established; disconnecting said removable security device from said system capable of performing a secure service; re-connecting said removable security device with said system capable of performing a secure service; detecting that a re-connection between said removable security device and said system capable of performing a secure service has been established; and granting a requested secure service if the establishment of a re-connection between said removable security device and said system capable of performing a secure service has been detected.

Accordingly, when a user wants to perform a sensitive operation that requires access to a secure service, preferably allowing access to a securely stored key, of the removable security device, preferably a smart card, the smart card allows access to the key only after the user first removing and re-inserting the smart card. As a physical re-insert is detected, it is not possible for an attacker to use malicious code to simulate this, and thus an attacker does gain unauthorized access to secure services.

According to another preferred embodiment, the method further comprises the steps of notifying the removable security device that a re-connection is to be expected, starting a time period of a first predetermined duration upon said notification being received by the removable security device; said secure service being granted if said re-connection between said removable security device and said system capable of performing a secure service has been detected within said first time period.

Accordingly, this ensures that there is only a small time window for the user to invoke a secure operation, and the step of removing, thus disconnecting, and re-inserting, thus re-connecting, the smart card which is used as an additional authorization step. Any re-insertion not happening during this time will not grant any rights to the secure service. This is a sign of reinforcement of the user's consent and willingness, to perform this specific sensitive operation now, as it prevents completing a sensitive operation a user invokes, but does not authorize by removing and re-inserting the smart card at that time, and later unrelated to that removes and re-inserts the smart card for different purposes, say for a short leave from his desk. Also, this prevents an attacker from using malicious code to invoke a secure operation, and waiting until by chance the user removes and re-inserts the smart card.

In another preferred embodiment, the method comprises the additional step of starting a time period of a second predetermined duration upon the establishment of said re-connection between said removable security device and said system capable of performing a secure service having been detected; said secure service being granted if said secure service is requested within the second time period, otherwise denied.

Accordingly, once the re-insertion has occurred, the computer has time to bring the smart card into a state that allows for further processing the secure operation, and to access the secure service. If the secure service is not accessed or requested within this time, the secure service is denied. This ensures that there is only a small time window for an attacker to exploit, using malicious code, to issue an own request for a secure service.

In a further preferred embodiment, a further secure service requested is denied if it is received after a first secure service has been granted.

Accordingly, fraudulent attempts to gain access to a secure service can be detected, because if an attacker manages to use the time window before the user's secure service request is issued to the smart card to gain access to a secure service, then the secure service invoked by the user will fail, and thus the fraudulent access can be detected.

In a further preferred embodiment, the method comprises the further step of performing safety actions, if a secure service request is denied, corresponding to the respective cause of denial; said safety actions comprising any of
- permanently or temporarily deactivating said device,
- permanently or temporarily disabling at least one secure service,
- sending a warning and/or notification message, and
- logging information corresponding to any of
   - occurrence of a denial,
   - secure service requested,
   - and/or cause of denial, and
   - date and/or time of the occurrence.

Accordingly, it is possible to learn that an unauthorized access to a secure service has occurred, and with this it can be learned that a possible attacker might have tried to access a secure service. Also, these safety actions will be so chosen as to correspond to the safety policy set forth in company, business or other policy.

In yet another preferred embodiment, a user is prompted to disconnect and re-connect the removable security device after the notification to expect a re-connect is received.

Preferably, the removable security device is a smart card, a USB smart card, a dongle, or a hardware token.

Alternatively, the removable security device is a semiconductor device for use in a smart card, a USB smart card, a dongle, or a hardware token.

Although smart cards are very common nowadays, and still gaining in use, due to ease of handling, support and standardization, also other devices such as USB smart cards, dongles or other hardware tokens may be used. All of these removable security devices typically comprise a piece of semiconductor that provides secure services, such as to safely store and allow access to credentials, secrets, and/or keys, and may additionally perform more complex secure services such as encryption/decryption, generating keys or hashes.

In a second preferred embodiment, a removable security device comprises connection detection means for detecting the establishment of a connection with a system capable of performing secure services; re-connection detection means, for determining that a detected establishment of a connection with a system capable of performing secure services is a re-connection; and secure service response means; said secure service response means granting access to a secure service after the establishment of said re-connection with a system has been detected.

Accordingly, it is ensured the physical presence and consent of the user to perform a secure operation.

In a further preferred embodiment, the removable security device additionally comprises a first timer having a predetermined first time period, being started upon said removable security device receiving a notification to expect a re-connection; wherein said secure service response means grants a secure service request if said establishment of a re-connection with a system is detected before said first time period elapses.

In a further preferred embodiment, the removable security device further comprises a second timer having a predetermined second time period, being started upon said establishment of a re-connection with a system being detected; wherein said secure service response means grants a requested secure service if said establishment of a re-connection with a system has been detected before said second time period elapses, and otherwise denies said request.

In yet a further preferred embodiment, the removable security device further comprises safety action means for performing safety actions, if said secure service response means deny a secure service request; said safety actions comprising any of
- permanently or temporarily deactivating said removable security device,
- permanently or temporarily disabling at least one secure service,
- logging the occurrence of a denial, with information corresponding to secure service requested and/or cause of denial and/or date and/or time of the occurrence, and
- effecting sending a warning and/or notification message.

Preferably, the removable security device is a smart card, a USB smart card, a dongle, or a hardware token.

Alternatively, the removable security device is a semiconductor device for use in a smart card, a USB smart card, a dongle, or a hardware token.

In a third preferred embodiment, a system for performing secure operations, comprises a removable security device as of the second preferred embodiment; a computing device; and connection means for connecting said removable security device with said computing device.

Accordingly, a user may perform a sensitive operation on a computer he uses, utilizing the credentials, keys and other secure services assigned to him, while ensuring the physical presence and consent of the user.

In a further preferred embodiment, the computing device is a personal computer, a handheld, a mobile telecommunication terminal, a digital organizer or any other device capable of computing and performing sensitive operations.

For using a removable security device, such as may be a smart card, in a system for performing secure services on a computer, it is necessary that there is communication occurring between the smart card and the computer. However, many communication protocols and bus systems are known today, and it may be chosen any suitable protocol or bus for connecting the removable security device, preferably a smart card, with a computer.

### BRIEF DESCRIPTION OF THE DRAWINGS

The foregoing and other objects, aspects and advantages of the invention will be better understood from the following detailed description of a preferred embodiment of the invention with reference to the drawings, in which:
- Fig. 1: shows a system for performing secure services according to a preferred embodiment of the invention;
- Fig. 2: is a flowchart showing operation of a conventional smart card;
- Fig. 3: shows the utilization of detecting a re-insert event as a step for authorization to access a secure service according to a preferred embodiment of the invention;
- Fig. 4: shows a removable security device of a preferred embodiment of the invention; and
- Fig. 5: shows a flowchart of a method of controlling access to a secure service by means of a removable security device according to a preferred embodiment.

### DETAILED DESCRIPTION OF A PREFERRED EMBODIMENT OF THE INVENTION

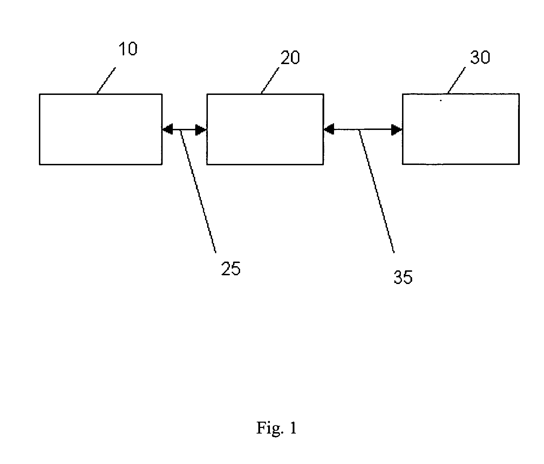

Fig. 1 shows a system for performing secure services according to a preferred embodiment of the invention. In Fig. 1, a removable security device 10 is coupled via a coupling 25 to an interface unit 20, and the interface unit 20 is coupled via a coupling 35 to a computing means 30.

The interface unit 20 is preferably a transparent reader for smart cards, i.e., a card reader that is "transparent" in the sense that it is transparent to the communication between computing device 30 and removable security device 10, which is preferably a smart card. However, as other types of removable security devices 10 may also be used, such as a hardware token, a dongle, or a USB smart card, for example, the choice of interface unit 20 will correspond to the type of secure device 10 being used. Other examples of known interface units are computer keyboards integrating a transparent smart card reader.

The coupling 25 is established by physical contact of the contact pins of the device 10 and the interface unit 20. Alternatively, using radio based communication, the coupling is established using radio signals, and the interface unit 20 might comprise an antenna.

The coupling 35 preferably includes an USB bus, but may also include other buses used in computers, such as Firewire, RS232 serial bus, PS/2 bus, or radio-based communication such as Bluetooth or WLan. The choice of coupling 35 will typically depend on interfaces supported by a computing device 30, as well as interface unit 20.

The computing device 30 is preferably a computer, which additionally may be connected to a network, or the internet, but may also be a mobile telecommunication terminal, a handheld, or any other device capable of computing and performing a sensitive operation.

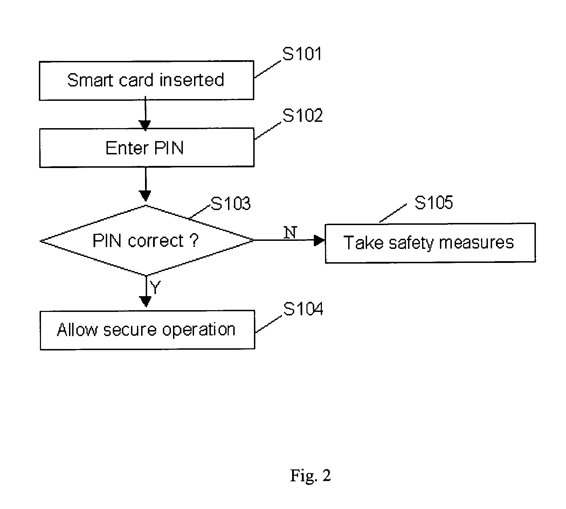

Fig. 2 shows a simplified flowchart of how a conventional smart card is used. First, in step S101, the user enters the smart card in the corresponding reader. Then, in step S 102, the user enters his or her Personal Identification Number PIN. The entered PIN is then verified by the smart card in step S103. If the smart card determines that the PIN entered is correct, then from this time the smart card allows secure operation, i.e., access to the secure functions of and the credentials stored in the smart card (Step S104). If, in step S103, the smart card determines that the entered PIN is not correct, then measures for safety may be taken (Step S105). This measures may consist of disabling access to the card after a predetermined number of times successively an incorrect PIN has been entered.

As already mentioned, this usage has the disadvantage that, after the initial authorization by entering the correct PIN, the smart card continuously provides all secure services offered by it and allows all secure services to be performed. An attacker might exploit this situation, using malicious code, to gain access to the credentials and keys stored on the smart card, without the users consent.

According to a preferred embodiment of the invention, a user that wants to perform a sensitive operation, such as for example digitally signing a document on his computer, that requires a secure service provided by a removable security device, preferably a smart card, is required to remove the removable security device, and to re-insert it, before the secure service necessary for performing the sensitive operation is provided, preferably in addition to other known authorization measures, such as for example entering a PIN.

The removable security device provides at least one secure service, such as preferably access to a digital private key stored in the device. Other secure services are, for example, safely storing sensitive information, such as a key, or a credential, allowing access to stored sensitive information or more complex services such as encryption, decryption, generating keys or hashes, and many more secure services provided by known smart cards, dongles or hardware tokens.

With requiring such removal and re-insert of a removable security device, it is ensured that a user has to be physically present in order that a sensitive operation can be performed, and that he consents to the sensitive operation being performed, as he willingly has to remove and re-insert the removable security device. Also, an attacker cannot simulate this using malicious code running on a computer.

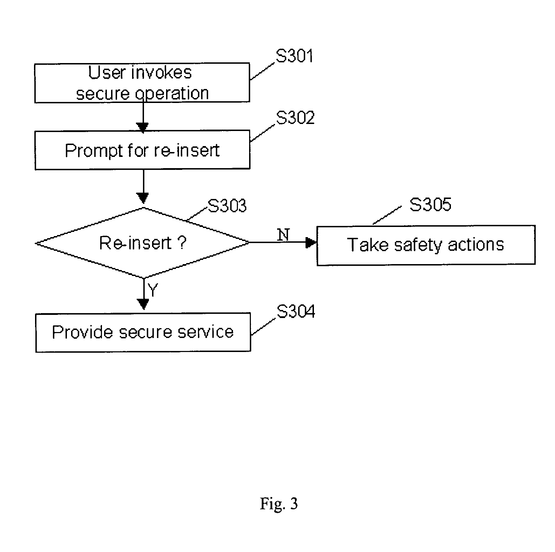

Fig. 3 shows the utilization of detecting a re-insert event as a step for authorization to access a secure service according to a preferred embodiment. In Fig. 3, in a preferred method of controlling access to a secure service by means of a removable security device, being connected with a system capable of performing a secure service, a user fist invokes a secure operation, requiring a secure service (Step S301). Upon this, the user may optionally be prompted to remove and re-insert the removable security device, so that he is reminded that this step is necessary to successfully proceed (Step S302). Then, in step S303, it is monitored whether the removable security device is removed, i.e., the connection between the removable security device and the system capable of performing a secure operation is disconnected, and again re-inserted, i.e., it is detected that a re-connection between the removable security device and the system has been established. If this is not the case, it is proceeded to step S305, and according safety actions are taken, such as for example disabling the removable security device. If, in step S303, it is detected that a re-connection of the removable security device with a system capable of providing a secure service has been established, it is proceeded to step S304, where a requested secure service is now granted.

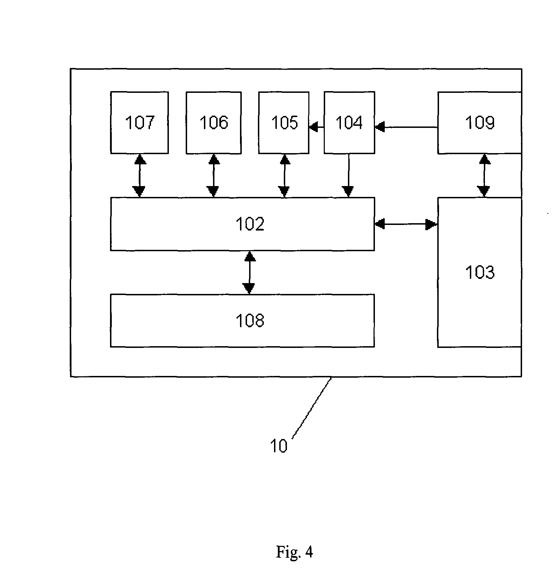

Fig. 4 shows a removable security device 10. In Fig. 4, the removable security device 10 comprises interface means 103, connection detection means 109, re-connection detection means 104, secure service response means 102, first timing means 106, second timing means 105, action means 107 and secure storage and operation means 108.

The interface means 103 of the removable security device 10 provide an interface for the removable security device to be able to communicate data with a system or device that wants to access the removable security device.

The connection detection means 109 detect the occurrence of an event of the removable security device 10 being connected to a system or device capable of performing a secure service, preferably via an interface unit 20. That is, the connection means 109 are capable to detect the establishment of a connection between the removable security device, and a system

In the preferable case of the removable security device 10 being a smart card, this can be achieved for example by electrical contacts formed and arranged in such a way that a signal is created if and only if the smart card is physically inserted in a reader. Such contacts may be comprised in the connection detection means 109, or in the interface means 103. In case of radio communication, this might be achieved by antenna means such formed that the physical act of entering a corresponding radio field of an interface unit 20 can securely be detected. Preferably, in addition, data communication with the system or device at the other end of the connection may be tried to established to identify that there is actually a system present to communicate with.

This information obtained of a detected establishment of a connection between the removable security device and a system capable of performing secure services is made available to the re-connection detection means 104, which utilizes additional information and/or signals relating to the previous state of being connected, to in this way determine that a physical connecting event is actually a physical re-connecting event, preferably by also evaluating stored information of the previously established connected state, thus deducing that the detected establishment of a connection between the removable security device and a system capable of performing secure services is a re-connection.

This additional information the re-connection detecting means 104 utilizes may preferably be stored in a memory location associated with the re-connection detection means 104. As a valid re-insertion of the card should take only a relatively short time span, preferably 10 seconds, it suffices that the information is stored only temporally for at least this time span.

The secure storage and operation means 108 stores units of sensitive information such as credentials, keys, etc., and may additionally perform operations such as encrypting or decrypting data, or generate keys or calculate hashes. A secure service, such as accessing these sensitive information units is controlled and granted by secure service response means 102. The secure service response means 102 are connected with the interface means 103 for being capable of exchanging data with a system capable of performing secure services.

Requests for secure services, such as access to credentials or keys stored in the secure storage and operation means 108, is controlled by the secure service operation means 102. The sensitive operation means receives input from the re-connection detection means 104 and first and second timing means 106, 105, and utilizes the inputs received to determine whether to provide or deny a secure service requested. If the secure service response means 102 denies a service, a safety action means 107, connected to the former, performs safety actions and measures, preferably temporarily or permanently disabling the removable security device 10, logging information about the secure service requested, date and or time of the occurrence, and/or cause of denial.

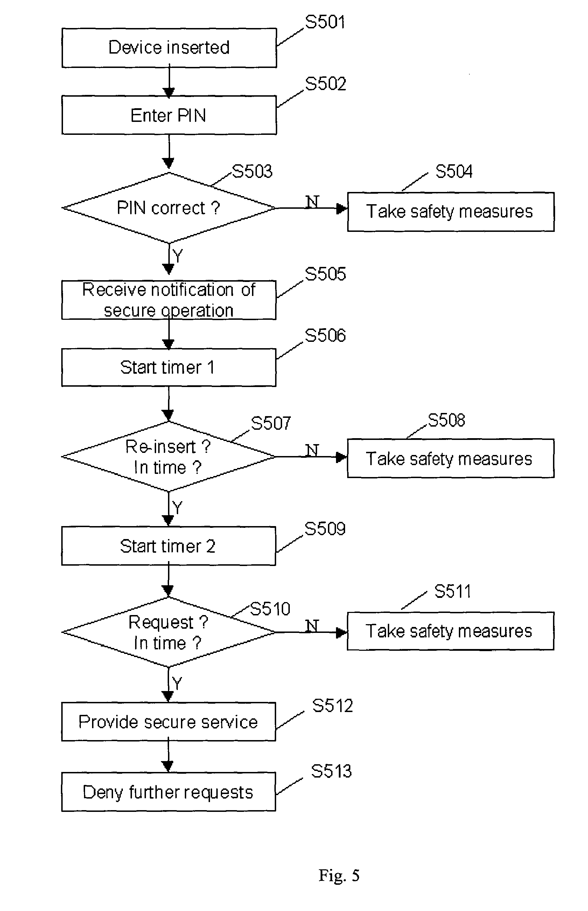

Fig. 5 shows a flowchart of a method of controlling access to a secure service by means of a removable security device according to a preferred embodiment.

First, the removable security device is connected with a system capable of performing a secure service (Step 501). It is then detected that a connection between the removable security device and a system capable of performing a secure service has been established. Accordingly, the removable security device will preferably carry out initialization processes. After this, the user enters the PIN number. This PIN code is communicated to and received by the removable security device (Step S502). The removable security device then verifies whether the entered PIN is correct or not (Step S503). If the PIN entered is not correct, the device proceeds to perform according safety actions (Step S504). If the entered PIN is correct, the removable security device will not yet grant secure services, and thus does not allow completing sensitive operation involving these services. Rather, the removable security device is now ready to receive notifications of secure services a user wants to invoke.

When the user invokes a secure service, it is first transmitted a notification to the removable security device, informing that it should expect to soon be disconnected form the system capable of performing a secure service. (Step S505). At this time, a time period of a first predetermined duration, preferably 10 seconds is started (Step S506).

The user may preferably be prompted on the computer to disconnect and then again re-connect the removable security device from, resp. with the system capable of performing a secure service.

The removable security device then is disconnected from the system capable of performing a secure service. Then, the removable security device again is re-connected with the system capable of performing a secure service.

In step S507, it is detected whether a re-connection between the removable security device and the system capable or performing a secure service has been established, and it preferably is also monitored whether this is detected during the first time period, i.e., before the first time period has elapsed. (Step S508). Preferably, if after the first time period has elapsed no re-connection has been detected, the removable security device proceeds to take according safety actions (Step 508).

Accordingly, with the verification that the removable security device has been removed and re-inserted, thus disconnected and re-connected, preferably within the first time period, an attacker can be prevented from exploiting normal re-insertion events occurring as authorizations to launch sensitive commands and requesting secure services.

If, in step S507, establishment of re-connection between the removable security device and a system has been detected, preferably within the first time period, it is preferredly proceeded to step S509. In step 509, a time period of a second predetermined duration, preferably 2 seconds, is started upon the detection of the establishment of re-connection between the removable security device and the system capable of providing a secure service.

Accordingly, there is time now for the system to, for example, execute a script, or other code, to bring the removable security device 10 into a state allowing further processing of the secure operation invoked, preferably by bringing the removable security device in substantially the same state as prior to the disconnecting of the removable security device from the system capable of performing a secure service.

If, in step S510, the second time period has elapsed without a detection of establishment of re-connection between the removable security device and the system having been made, corresponding safety action are preferably taken in step S511.

If, in step S510, it is determined that it has been detected that a re-connection has been established between the removable security device and a system capable of performing secure services within the second time period, i.e., before the second time period has elapsed, it is proceeded to step S512, where now a requested secure service is granted. Preferably, after the first request secure service has been granted, further requests are denied in step S513.

Accordingly, although the second time period may not have elapsed yet, no further requests for secure services will be answered by the removable security device. With this, it is ensured that each sensitive operation a user invokes requires the act of removing the device and re-inserting it, showing presence and consent. Also, with this, it is prevented that an attacker may access a secure service after the user's request has been issued in the remaining time of the second time period.

Additionally, in the unlikely case that an attacker manages to exploit the time between detection of re-connection issuing the request for the secure service on behalf of the user, to request an own secure service, the user's request then will fail, and the user will accordingly be informed by the failure of the breach of security, as he is denied to complete the sensitive operation invoked, and so he is enabled to take appropriate steps, such as cancel all accounts or immediately shutdown, and thus to control possible damage.

The method described in the foregoing can also be realized in a program comprising code means for loading onto a removable security device, that, when executed, cause the method steps of detecting that a connection between a removable security device and a system has been established; detecting that a re-connection between said removable security device and a system has been established, and granting a requested secure service if the establishment of a re-connection between the removable security device and a system capable of performing a secure service has been detected, to be performed.

Such a program is preferably stored on a recording medium, or transmitted electronically over a network such as the internet.

## Claims

1. A method of controlling access to a secure service by means of a removable security device, comprising the steps of
connecting said removable security device with a system capable of performing a secure service;
detecting that a connection between said removable security device and a system capable of performing a secure service has been established;
disconnecting said removable security device from said system capable of performing a secure service;
re- connecting said removable security device with said system capable of performing a secure service;
detecting that a re-connection between said removable security device and said system capable of performing a secure service has been established; and
granting a requested secure service if the establishment of a re-connection between said removable security device and said system capable of performing a secure service has been detected.

2. The method according to claim 1, further comprising the step of
notifying said removable security device that a re-connection is to be expected,
starting a time period of a first predetermined duration upon said notification being received by said removable security device;
said secure service being granted if said re-connection between said removable security device and said system capable of performing a secure service has been detected within said first time period.

3. The method according to any of the preceding claims, further comprising the step of
starting a time period of a second predetermined duration upon the establishment of said re-connection between said removable security device and said system capable of performing a secure service having been detected;
said secure service being granted if said secure service is requested within the second time period, otherwise denied.

4. The method according to any of the preceding claims, further comprising the step of
denying a further secure service requested if it further secure service request is received after a first secure service has been granted.

5. The method according to any of the preceding claims, further comprising the step of
performing safety actions, if a secure service request is denied, corresponding to the respective cause of denial;
said safety actions comprising any of
- permanently or temporarily deactivating said device,
- permanently or temporarily disabling at least one secure service,
- sending a warning and/or notification message, and
- logging information corresponding to any of
- occurrence of a denial,
- secure service requested,
- and/or cause of denial, and
- date and/or time of the occurrence.

6. The method according to any of the preceding claims, further comprising the step of
prompting a user to disconnect and re-connect said removable security device after said notification

7. A removable security device (10), comprising
connection detection means (109) for detecting the establishment of a connection with a system capable of performing secure services;
re-connection detection means (104), for determining that a detected establishment of a connection with a system capable of performing secure services is a re-connection; and
secure service response means (102);
said secure service response means (102) granting access to a secure service after the establishment of said re-connection with a system has been detected.

8. The removable security device (10) according to claim 7, further comprising
a first timer (106) having a predetermined first time period, being started upon said removable security device (10) receiving a notification to expect a re-connection;
wherein said secure service response means (102) grants a secure service request if said establishment of a re-connection with a system is detected before said first time period elapses.

9. The removable security device (10) according to claim 6 or 7, further comprising
a second timer (105) having a predetermined second time period, being started upon said establishment of a re-connection with a system being detected;
wherein said secure service response means (102) grants a requested secure service if said establishment of a re-connection with a system has been detected before said second time period elapses, and otherwise denies said request.

10. The removable security device (10) according to one of claims 6 to 8, said secure service response means (102) denying a second secure service request received after a first secure service request has been granted.

11. The removable security device (10) according to one of claims 6 to 9, further comprising
safety action means (107) for performing safety actions, if said secure service response means (102) deny a secure service request;
said safety actions comprising any of
- permanently or temporarily deactivating said device (10),
- permanently or temporarily disabling at least one secure service,
- logging the occurrence of a denial, with information corresponding to secure service requested and/or cause of denial and/or date and/or time of the occurrence, and
- effecting sending a warning and/or notification message.

12. The removable security device (10) according to one of claims 6 to 10, said removable security device (10) being a smart card, a USB smart card, a dongle, or a hardware token.

13. The removable security device (10) according to one of claims 6 to 10, said device being a semiconductor device for use in a smart card, a USB smart card, a dongle, or a hardware token.

14. A system for performing secure operations, comprising
a removable security device (10) according to any of claims 6 to 12;
a computing device (30); and
connection means for connecting said removable security device with said computing device (30);

15. The system according to claim 13,
said computing device (30) being a personal computer, a handheld, a smart terminal, a mobile phone, or a digital organizer.
